# FASCICULE DE BREVET EUROPEEN

(11) **EP 1 520 478 B1**
(45) Date de publication et mention de la délivrance du brevet: **24.05.2006**
(21) Numéro de dépôt: 03026467.5
(22) Date de dépôt: 20.11.2003
(51) Int. Cl.: A21D 2/38, A21D 2/36, A21D 8/04, A21D 6/00, A21D 8/02

(54) **Procédé pour la fabrication de produits de boulangerie et notamment du pain**
Verfahren zur Herstellung von Bäckereierzeugnissen, insbesondere Brot
Method for producing bakery goods, in particular bread

(30) Priorité: 01.10.2003 FR 0311480
(43) Date de publication de la demande: 06.04.2005
(73) Titulaire: INTERNATIONAL BAKING CONCEPT AND ENGINEERING(I.B.C.E.), 69460 BLACE (FR)
(72) Inventeur: Brunet, Pascal, 69400 Gleize (FR)
(74) Mandataire: Arbousse-Bastide, Jean-Claude Ph.

(56) Documents cités:
- FR-A- 2 701 356
- FR-A- 2 784 862
- GB-A- 190 925 341
- PATENT ABSTRACTS OF JAPAN vol. 1995, no. 04, 31 mai 1995 (1995-05-31) & JP 07 008159 A (TORIGOE SEIFUN KK), 13 janvier 1995 (1995-01-13)

## Description

La présente invention a pour objet un procédé pour la fabrication de produits de boulangerie et notamment du pain.

On sait que la fabrication du pain comporte plusieurs étapes de panification à savoir, essentiellement, le pétrissage, moment décisif, qui consiste à mélanger tous les ingrédients de la pâte, la fermentation de la pâte ou pointage, la pesée destinée à diviser la pâte en pâtons et la cuisson dont la durée varie selon la forme et le poids des pâtons transformant ces derniers en pains.

On connaît également des procédés de panification industriels qui comportent en outre une étape de surgélation tels que le procédé "précuit surgelé" qui consiste à réaliser, après la mise en forme des pâtons, une pré-cuisson puis surgélation et une cuisson sur le lieu de vente ou encore le procédé "cru pré-poussée prêt à cuire" qui consiste à surgeler un pâton de pâte crue, pré-fermentée et scarifiée, en sorte que sur le lieu de vente ledit pâton surgelé puisse être introduit directement dans le four.

Le procédé "précuit surgelé" présente l'inconvénient d'un temps de fabrication avant surgélation long et un volume de produit surgelé important à l'inverse du procédé "cru pré-poussée prêt à cuire" mais qui ne donne pas satisfaction en raison de la durée de conservation limitée à trois semaines du fait de la poussée qui ne peut se réaliser passé ce délai

Le document FR2784862 décrit un procédé qui permet de remédier à ces inconvénients en permettant l'obtention de pains ou de viennoiseries d'aspect et saveur proches de ceux obtenus par un procédé traditionnel tout en permettant une conservation de longue durée des pâtons à l'état congelé. Le procédé consiste à incorporer à la farine, avant le pétrissage, une préparation enzymatique comprenant au moins une enzyme issue du blé associée à de la farine de blé, du gluten, un émulsifiant et antioxydant, puis à réaliser le pétrissage en incorporant la levure en fin de pétrissage, à réaliser ensuite une pré-poussée d'une durée inversement proportionnelle à la quantité de levure incorporée puis à effectuer la scarification et à surgeler enfin le produit obtenu.

La présente invention a pour but de proposer un procédé pour la panification de pains ou de viennoiseries permettant d'améliorer la saveur, l'alvéolage, la conservation et le maintien en volume des produits réalisés après cuisson par les procédés actuels et notamment les produits obtenus par le procédé décrit dans le document FR2784862.

Le procédé de panification selon la présente invention se caractérise essentiellement en ce qu'il consiste à incorporer à la farine, avant le pétrissage, une préparation enzymatique puis à réaliser le pétrissage en incorporant un pâte fermentée et un pourcentage de malte et de germe de blé puis, en fin de pétrissage, à incorporer de la levure et à ajouter un temps de repos variable en fonction de la qualité et de l'aspect du mélange obtenu, puis à réaliser une pré-poussée d'une durée inversement proportionnelle à la quantité de levure incorporée, puis à effectuer la scarification et à surgeler enfin le produit obtenu.

La fermentation de la pâte fermentée sera une fermentation naturelle, liquide ou pâteuse et sera réalisée à partir d'un mélange d'eau et de farine fermenté permettant notamment de renforcer la pâte à pain selon la présente invention pour maintenir un volume normal du pain obtenu après la cuisson du pâton surgelé constitué de ladite pâte à pain.

La levure sera de la levure liquide ou fraîche dont la quantité incorporée, de l'ordre de 3 à 6% en poids de pâte, sera fonction de la durée de conservation désirée.

La préparation enzymatique incorporée à la farine comportera au moins une enzyme issue du blé, associée à la farine de blé, du gluten, un émulsifiant et un antioxydant.

Les enzymes utilisées seront choisies parmi celles qui permettent de favoriser le réseau glutineux et de fixer une quantité d'eau importante dans le produit comme les enzymes hémi-cellulotyques.

Le temps de pétrissage se déroulera en deux temps de durées différentes, un temps de frasage de 1 à 8 minutes et un pétrissage de 10 à 20 minutes réalisé de manière que la pâte garde toute sa force.

La surgélation sera réalisée de préférence à -28° pendant 40 minutes.

On notera que les pâtons obtenus par le procédé selon la présente invention pourront être mis en décongélation de manière que la poussée soit réalisée avant la cuisson.

Le produit surgelé obtenu par le procédé selon la présente invention peut être enfourné congelé par un personnel ne présentant pas de compétence particulière.

Un exemple de composition peut être le suivant, sans présenter de caractère limitatif :
- 100 kg de farine
- 50 à 70 litres d'eau
- 1,5 à 3% de sel
- 3 à 6% de levure
- 5 à 25% de pâte fermentée : mélange d'eau et de farine fermenté
- 16 kilos de :
   farine de blé
   gluten de blé
   émulsifiant E472e
   antioxydant E300
   enzyme(s)
- 0,01 % de malte et de germe de blé

Par rapport aux procédés actuels, le procédé selon la présente invention permet d'améliorer la saveur du produit obtenu, son alvéolage et sa conservation après la cuisson tout en réduisant la durée de fabrication et en maintenant le volume du pain après cuisson grâce à la pâte fermentée. Par ailleurs l'amélioration au niveau des ingrédients de la formulation par l'incorporation de malte et de germe de blé permet de modifier la structure de la croûte en la rendant plus croustillante et moins épaisse ainsi que sa couleur pour convenir aux goûts internationaux.

## Revendications

1. Procédé de panification pour produits de boulangerie et notamment du pain **caractérisé en ce qu'**il consiste à incorporer à la farine, avant le pétrissage, une préparation enzymatique, puis à réaliser le pétrissage en incorporant un pâte fermentée et un pourcentage de malte et de germe de blé puis, en fin de pétrissage, à incorporer de la levure et à ajouter un temps de repos variable en fonction de la qualité et de l'aspect du mélange obtenu, puis à réaliser une pré-poussée d'une durée inversement proportionnelle à la quantité de levure incorporée, puis à effectuer la scarification et à surgeler enfin le produit obtenu.

2. Procédé de panification selon la revendication 1 **caractérisé en ce que** la pâte fermentée est issue d'une fermentation naturelle, liquide ou pâteuse.

3. Procédé de panification selon la revendication 2 **caractérisé en ce que** la pâte fermentée est un mélange d'eau et de farine qu'on laisse fermenter.

4. Procédé de panification selon l'une quelconque des revendications précédentes **caractérisé en ce que** la préparation enzymatique incorporée à la farine comporte au moins une enzyme issue du blé, associée à la farine de blé, du gluten, un émulsifiant et un antioxydant.

5. Procédé de panification selon l'une quelconque des revendications précédentes **caractérisé en ce que** les enzymes utilisées sont choisies parmi celles permettant de favoriser le réseau glutineux et de fixer une quantité d'eau importante dans le produit comme les enzymes hémi-cellulotyques.

6. Procédé de panification selon l'une quelconque des revendications précédentes **caractérisé en ce que** la quantité de malte et de germe de blé est de l'ordre de 0,01 % en poids de pâte.

7. Procédé de panification selon l'une quelconque des revendications précédentes **caractérisé en ce que** la surgélation est réalisée de préférence à -28° pendant 40 minutes.

8. Procédé de panification selon l'une quelconque des revendications précédentes **caractérisé en ce que** la levure est de la levure liquide ou fraîche.

9. Procédé de panification selon la revendication 8 **caractérisé en ce que** la quantité de levure incorporée est de l'ordre de 3 à 6% en poids de pâte.

10. Procédé de panification selon l'une quelconque des revendications précédentes **caractérisé en ce que** la quantité de pâte fermentée est de l'ordre de 5 à 25% en poids de pâte.

## Claims

1. Breadmaking process for bakery products, particularly bread, **characterised in that** it consists in adding an enzyme preparation to the flour before it is kneaded, and in kneading with the addition of fermented dough and a percentage of malt and wheat germ and, at the end of kneading, adding yeast and providing a resting time that varies with the quality and appearance of the mixture obtained, and a preliminary raising time that is indirectly proportional to the quantity of yeast added, and then scoring and finally freezing the resulting product.

2. Breadmaking process according to claim 1 **characterised in that** the fermented dough is obtained by natural fermentation, in liquid or paste form.

3. Breadmaking process according to claim 2 **characterised in that** the fermented dough is a mixture of water and flour that has been left to ferment.

4. Breadmaking process according to any of the previous claims **characterised in that** the enzyme preparation added to the flour consists in at least one enzyme from wheat, associated with wheat flour, gluten, emulsifier and antioxidant.

5. Breadmaking process according to any of the previous claims **characterised in that** the enzymes used are selected from those that are favourable to the gluten network and fix a large quantity of water in the product, such as hemicellulose enzymes.

6. Breadmaking process according to any of the previous claims **characterised in that** the quantity of malt and wheat germ is about 0.01% by weight of the dough.

7. Breadmaking process according to any of the previous claims **characterised in that** freezing is preferably achieved at -28°C for 40 minutes.

8. Breadmaking process according to any of the previous claims **characterised in that** the yeast is liquid or fresh yeast.

9. Breadmaking process according to claim 8 **characterised in that** the quantity of yeast added is about 3 to 6% by weight of the dough.

10. Breadmaking process according to any of the previous claims **characterised in that** the quantity of fermented dough is about 5 to 25% by weight of the dough.

## Patentansprüche

1. Verfahren zur Brotherstellung für Bäckereiprodukte und insbesondere Brot, **dadurch gekennzeichnet, dass** es darin besteht, dem Mehl vor dem Kneten ein Enzympräparat beizumengen, und anschließend das Kneten auszuführen, wobei ein fermentierter Teig und ein Malz- und Weizenkeimanteil beigemengt wird, und anschließend, am Ende des Knetens, die Hefe beizumengen und eine Ruhepause hinzuzufügen, die in Abhängigkeit von der Qualität und vom Aspekt des erhaltenen Gemisches variiert, und anschließend ein Vor-Aufgehen zu realisieren, dessen Dauer umgekehrt proportional zur beigemengten Hefemenge ist, und anschließend die Ritzung auszuführen und letztlich das erhaltene Produkt tief zu kühlen.

2. Verfahren zur Brotherstellung nach Anspruch 1, **dadurch gekennzeichnet, dass** der fermentierte Teig aus einer natürlichen Fermentation, flüssig oder teigig, hervorgeht.

3. Verfahren zur Brotherstellung nach Anspruch 2, **dadurch gekennzeichnet, dass** der fermentierte Teig ein Gemisch aus Wasser und Mehl ist, die man fermentieren lässt.

4. Verfahren zur Brotherstellung nach einem der vorhergehenden Ansprüche, **dadurch gekennzeichnet, dass** das dem Mehl beigemengte Enzympräparat zumindest ein aus Weizen hervorgehendes Enzym, das dem Weizenmehl assoziiert ist, Gluten, einen Emulgator und einen Antioxidans aufweist.

5. Verfahren zur Brotherstellung nach einem der vorhergehenden Ansprüche, **dadurch gekennzeichnet, dass** die verwendeten Enzyme unter denjenigen ausgewählt werden, die es erlauben, das klebrige Netz zu fördern und eine beachtliche Wassermenge im Produkt zu fixieren, wie die Hemizellulose-Enzyme.

6. Verfahren zur Brotherstellung nach einem der vorhergehenden Ansprüche, **dadurch gekennzeichnet, dass** die Malz- und Weizenkeimmenge 0,01 % des Teiggewichts umfasst.

7. Verfahren zur Brotherstellung nach einem der vorhergehenden Ansprüche, **dadurch gekennzeichnet, dass** das Tiefkühlen vorzugsweise 40 Minuten lang bei -28° ausgeführt wird.

8. Verfahren zur Brotherstellung nach einem der vorhergehenden Ansprüche, **dadurch gekennzeichnet, dass** die Hefe flüssige oder frische Hefe ist.

9. Verfahren zur Brotherstellung nach Anspruch 8, **dadurch gekennzeichnet, dass** die beigemengt Hefemenge 3 bis 6% des Teiggewichts umfasst.

10. Verfahren zur Brotherstellung nach einem der vorhergehenden Ansprüche, **dadurch gekennzeichnet, dass** die Menge des fermentierten Teigs 5 bis 25% des Teiggewichts umfasst.
